(19) Europäisches Patentamt
European Patent Office
Office européen des brevets

(11) Numéro de publication: 0 359 597 A1

(12) **DEMANDE DE BREVET EUROPEEN**

(21) Numéro de dépôt: 89401956.1

(51) Int. Cl.5: **C 07 F 15/00**

(22) Date de dépôt: 07.07.89

(30) Priorité: 20.07.88 FR 8809789

(43) Date de publication de la demande: 21.03.90 Bulletin 90/12

(84) Etats contractants désignés: AT BE CH DE ES FR GB GR IT LI LU NL SE

(71) Demandeur: RHONE-POULENC CHIMIE
25, quai Paul Doumer
F-92408 Courbevoie Cédex (FR)

(72) Inventeur: Huser, Marc
36, rue du Fossé Rietberg
F-67100 Strasbourg (FR)

Osborn, John
10, rue Daniel Hirtz
D-67000 Strasbourg (FR)

(74) Mandataire: Vignally, Noel et al
Rhône-Poulenc Chimie Service Brevets Chimie 25 Quai Paul Doumer
F-92408 Courbevoie Cédex (FR)

The title of the invention has been amended (Guidelines for Examination in the EPO, A-III, 7.3).

(54) **Complexes à base de palladium.**

(57) La présente invention concerne de nouveaux complexes à base de palladium permettant la complexation de dérivés aromatiques chlorés. Ces complexes permettent de pratiquer sur des dérivés chlorés, les réactions d'hydrogénolyse, d'hydrocarbonylation ou d'alcoxycarbonylation.

EP 0 359 597 A1

**Description**

## NOUVEAUX COMPLEXES A BASE DE PALLADIUM

La présente invention concerne de nouveaux complexes. Elle concerne plus particulièrement de nouveaux complexes à base de palladium. Le but visé par la présente invention est encore plus particulièrement la formation de complexes de palladium et de dérivés aromatiques chlorés.

Les complexes du palladium et de la triphénylphosphine sont connus depuis très longtemps. Il est, par exemple, décrit par HECK dans le brevet US 3960932 et US 3988358, la préparation et l'utilisation des complexes à base de palladium et de triphénylphosphine. Ces complexes permettent les réactions de carbonylations de dérivés aromatiques bromés ou iodés mais ne permettent en aucun cas de procéder aux carbonylations de dérivés aromatiques chlorés.

A la lecture de l'art antérieur, lorsque l'homme de l'art cherchait à carbonyler des dérivés aromatiques en milieu homogène, il était toujours nécessaire de partir de dérivés aromatiques bromés ou iodés puis de les complexer à un sel complexe de palladium. Or, il est connu depuis déjà longtemps que les dérivés aromatiques bromés sont d'un prix nettement supérieur aux dérivés chlorés. Le problème de la carbonylation des dérivés aromatiques chlorés est un problème que la présente invention a cherché à résoudre.

Les nouveaux complexes de la présente invention répondent à la formule (I) suivante :

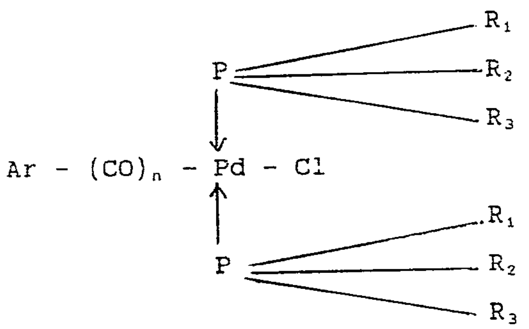

(I)

dans laquelle

- Ar représente un radical aromatique mono ou polycyclique ou hétérocyclique éventuellement substitué
- $R_1$, $R_2$, $R_3$ représentent chacun des groupes identiques ou différents choisis parmi les radicaux cyclohexyle, benzyle, isopropyle, l'un des groupes $R_1$, $R_2$ ou $R_3$ pouvant être remplacé par un groupe phényl lorsque les deux autres représentent un groupe cyclohexyle.
- n représente un nombre entier égal à 0 ou 1.

Les complexes de formule (I) de la présente invention sont préparés par au moins trois méthodes de préparation.

Selon une première méthode de préparation, on met en contact un composé de formule (II) suivante :

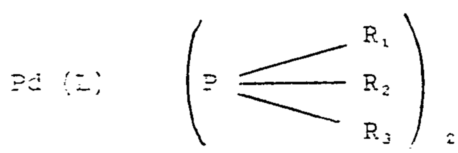

( II )

dans laquelle

- le motif L représente un groupe labile en présence de ArCl.
- les groupes $R_1$, $R_2$, $R_3$ ont la même signification que dans la formule (I) avec un dérivé halogéno aromatique de formule ArCl et éventuellement de l'oxyde de carbone, lorsque n est différent de C.

Selon une deuxième méthode de préparation de complexes de formule (I), on met en présence

1. un complexe de palladium à l'état d'oxydation zéro choisi parmi, soit :

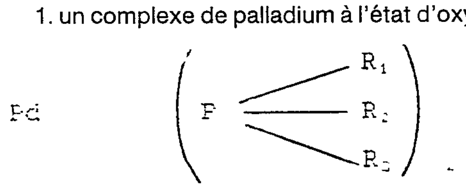

( II )

soit Pd $(L)_3$, en présence d'au moins deux équivalents de phosphine répondant à la formule

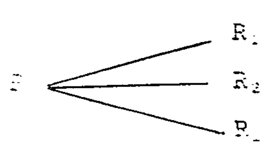

2. le dérivé chloroaromatique de formule ArCl et éventuellement de l'oxyde de carbone lorsque n est différent de zéro.

Selon une troisième méthode de préparation des complexes de formule (I), on met en présence un sel de palladium à l'état d'oxydation II choisi par exemple parmi le dichlorure, le dibromure, le diiodure de palladium, le diacétate de palladium, le nitrate de palladium, le sulfate de palladium ou l'oxyde de palladium avec le dérivé chloroaromatique, et au moins deux équivalents de phosphine de formule

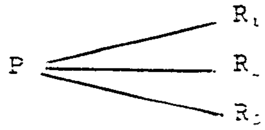

en présence d'un réducteur constitué d'hydrogène et en présence éventuellement d'oxyde de carbone lorsque n est différent de zéro.

Au sens de la présente invention, on entend par groupe labile (L) tout groupe qui en présence de ArCl peut être facilement échangeable.

Parmi ces groupes, on peut citer non limitativement :

- la dibenzylidène acétone (DBA)
- les groupes alkylène et de préférence l'éthylène

Pour l'ensemble des procédés de préparation ci-dessus mentionnés, on préfère opérer dans un solvant organique choisi parmi

- les solvants aromatiques tels que le benzène, le toluène, les xylènes
- les solvants aliphatiques
- les éthers tels que le diisopropyléther
- les amides tels que le diméthylformamide
- les nitriles tels que le benzonitrile

Le dérivé aromatique chloré peut également servir de milieu réactionnel.

Comme précisé précédemment, lorsque l'on part d'un complexe du palladium ne contenant pas de phosphine, on préfère mettre en oeuvre au moins 2 moles de phosphine par atome de palladium et de préférence entre 2 et 5 moles.

On préfère utiliser une quantité de solvant telle que la concentration en complexe ou en sel de palladium dans le milieu soit comprise entre 1 et 100 mmol par litre.

La température de mise en contact des réactifs est de préférence comprise entre la température ambiante et 200° C. La durée de la mise en contact variera avec la température mais une durée comprise entre une heure et environ une journée semble tout à fait conseillée.

Lorsque n est différent de zéro, c'est-à-dire lorsque le complexe de formule (I) comporte au moins un groupe -CO-, on opère la préparation de ce composé en présence d'oxyde de carbone. La pression d'oxyde de carbone sera avantageusement comprise entre 1 et 50 bar.

Le complexe de formule II utilisé comme matière première de synthèse du complexe de formule I dans lequel L représente la dibenzylidène acétone est un produit nouveau qui est revendiqué comme tel. Il répond à la formule III suivante :

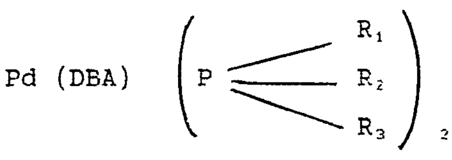

( III )

dans laquelle $R_1$, $R_2$, $R_3$ ont la même signification que précédemment.

Il sert évidemment à la préparation du complexe de formule (I). Il est préparé par mise en contact d'un sel complexe : dibenzylidène acétone - palladium avec au moins 2 équivalents de phosphine de formule

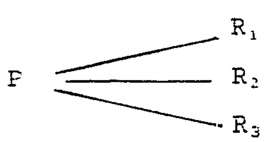

dans un solvant organique.

Le solvant organique est le même que celui qui servira à la synthèse des complexes de formule (I).

Les complexes de formule (I) obtenus dans le cadre de la présente invention sont utilisés notamment dans les réactions d'hydrogénolyse, d'hydrocarbonylation ou d'alcoxycarbonylation telles que décrites dans les demandes de brevets déposées conjointement avec la présente demande.

La demande sera plus complètement décrite à l'aide des exemples suivants qui ne doivent en aucun cas être considérés comme limitatifs de l'invention.

Dans les exemples suivants, les abréviations utilisées ont la signification suivante :
. D B A = dibenzylidène acétone
. Cy = cyclohexyl
. Bz = benzyl

EXEMPLE 1

Pd (DBA) $(PCy_3)_2$ <– $Pd(DBA)_3$ + 2 $PCy_3$

500 mg (0,55 mM) de $Pd(DBA)_3$ et 458 mg (1,65 mM soit un excès de 50 %) de $PCy_3$ sont dissous dans 50 ml de benzène. La solution du mélange est chauffée à 50°C pendant 16 heures puis le palladium métallique formé est séparé par filtration ; après évaporation à sec du filtrat, le solide orange ainsi obtenu est lavé avec 40 ml d'éther pour extraire l'excès de DBA et de phosphine. Une poudre jaune (342 mg, R = 70 %) est isolée caractérisée par RMN ($^1H$ et $^{31}P$ et IR).

IR (nujol) ($\nu$ $cm^{-1}$) : 1640 ( C=0) ; 1575 et 1585 (C=C)

RMN$^1H$(200 MHz, $C_6D_6$) $\delta$ (ppm) : 1,3 à 2,3 (m, 66H, protons aliphatiques de $PCy_3$) ; 7,1 à 7,7 (m, 10H, H aromatiques de DBA) ; 5,1 (m, 2H, protons oléfiniques) ; 8,2 (m, 2H, protons oléfiniques).

RMN$^{31}$ P-[$^1H$](80 MHz, $C_6D_5CD_3$) $\delta$ : 35 ppm.

EXEMPLE 2

$Pd(PCy_3)(C_6H_5)Cl$ <– $Pd(DBA)(PCy_3)_2$ + $C_6H_5Cl$

1,3 g (1,44 mM) de $Pd(DBA)(PCy_3)_2$ sont dissous dans 100 ml de chlorobenzène. La solution est maintenue sous agitation à 60°C pendant 2 heures puis filtrée pour enlever les traces de palladium métallique. Après évaporation du filtrat, le solide ainsi obtenu est lavé avec 50 ml d'éther pour extraire la DBA libérée au cours de la réaction. 850 mg (1,09 mM, R = 76 %) d'un produit blanc sont isolés.

IR(nujol) $\nu$ ($cm^{-1}$) : 705 et 740 (C-C aromatique monosubstitué)

RMN $^1H$(200 MHz, $C_6D_6$) $\delta$ (ppm) : 7,74 (d, 1H, hydrogène aromatique ortho) ; 7,13 (t, 2H, hydrogènes aromatiques méta) ; 7,00 (t, 2H, hydrogènes aromatiques para) ; 1,2 à 2,35 (m, 66H, protons aliphatiques des $PCy_3$).

RMN $^{31}P$-[$^1H$] (80 MHz, $C_6D_6$) $\delta$ (ppm) : 22,9 (s).

EXEMPLE 3

Carbonylation du complexe $Pd(PCy_3)_2(C_6H_5)Cl$ $Pd(PCy_3)_2(C_6H_5)Cl$ + CO –> $C_6H_5CO.Pd(PCy_3)_2Cl$

150 mg (0,2 mM) de $Pd(PCy_3)_2(C_6H_5)Cl$ sont dissous dans 15 ml de benzène et placés dans un autoclave sous 30 bars de CO. La solution incolore agitée à température ambiante devient rapidement jaune mais la réaction n'est totale qu'après 20 heures. Après filtration et évaporation du filtrat, un produit jaune (120 mg, R = 75 %) est isolé.

IR (nujol) $\nu$ ($cm^{-1}$) : 1630 (C = 0).

RMN $^1H$ (200 MHz, $C_6D_6$) $\delta$ (ppm) : 7,47 ; 7,95 et 9,60 (pics larges, 5H, protons aromatiques) ; 1,05 à 2,60 (m, 66H, protons aliphatiques des $PCy_3$).

RMN $^{31}P$-[$^1H$] (80 MHz, $C_6D_6$) $\delta$ (ppm) : 22,4 (s).

EXEMPLE 4

Synthèse du complexe $Pd(PCy_3)_2(C_6H_5)Cl$ en une étape à partir de $Pd(DBA)_3$

Une solution contenant 13,8 g (17 mmol) de $Pd(DBA)_3$ et 10,5 g (37,5 mmol soit un excès de 10%) de tricyclohexylphosphine dans 400 ml de chlorobenzène fraîchement distillé et dégazé est agitée pendant 2 heures à température ambiante puis chauffée à 55°C pendant 16 heures. La solution jaune sombre ainsi obtenue est filtrée lentement pour éliminer les traces de palladium métallique puis évaporée à sec. Le solide jaune est lavé avec 200 ml d'éther pour dissoudre la DBA libérée au cours de la réaction et la phosphine en excès puis avec 20 ml de THF pour éliminer les traces de $Pd(DBA)_3$ non consommé et enfin avec 100 ml d'éther. Le produit blanc (10,8 g, 13,9 mmol, R = 82%) est séché sous vide et analysé par IR, RMN $^1H$ et $^{31}P$.

IR (nujol) $\nu$ ($cm^{-1}$) ; 705 et 740 (C-C aromatique monosubstitué)

RMN $^1H$ (200 MHz, $C_6D_6$) $\delta$ (ppm) : 7,74 (d, 1H, hydrogène aromatique ortho) ; 7,13 (t, 2H, hydrogènes aromatiques méta) ; 7,00 (t, 2H, hydrogènes aromatiques para) ; 1,2 à 2,35 (m, 66H, protons aliphatiques des $PCy_3$).

RMN $^{31}P$-[$^1H$] (80 MHz, $C_6D_6$) $\delta$ (ppm) : 22,9 (s).

EXEMPLE 5

$Pd(DBA)(PPhCy_2)_2$ <– $Pd(DBA)_3$ + $2PPhCy_2$

Une solution contenant 970 mg (3,53 mmol) de $PCy_2Ph$ et 1,27 g (1,57 mmol) de $Pd(DBA)_3$ dans 50 ml de toluène est agitée pendant 3 heures à température ambiante. Après évaporation du solvant, le solide orange est lavé avec de l'éther pour dissoudre la DBA libérée au cours de la réaction et le léger excès de phosphine,

950 mg (1,07 mmol, R = 84%) d'un produit orange sensible à l'air isolé.
IR (nujol) ν ($cm^{-1}$) : 1640 (C = 0).
RMN $^{1}H$ (200 MHz, $C_6D_6$) δ (ppm) : 0,5-2,7 (m, 44H, Cy) ; 5,35 (m, 2H, H oléfiniques) ; 8,1 (m, 2H, H oléfinique) ; 6,9 - 7,7 (m, 20H, H aromatiques).
RMN $^{31}P$-[ $^{1}H$ ] (80 MHz, $C_6D_6$) δ (ppm) : 31,7 (s large).

EXEMPLE 6

$Pd(DBA)(PBz_3)_2$ <— $Pd(DBA)_3$ + 2 $PBz_3$
Une solution contenant 2,13 g (2,63 mmol) de $Pd(DBA)_3$ et 1,74 g (5,72 mmol, excès de 10%) de $PBz_3$ dans 150 ml de toluène est agitée pendant 2h30 à température ambiante puis évaporée à sec. Le solide ainsi obtenu est lavé avec 100 ml puis 2 fois 20 ml d'éther ce qui permet d'isoler 1,85 g (1,95 mmol, R = 74%) d'un produit jaune.
IR (nujol) ν ($cm^{-1}$) : 1640 (C = 0)
RMN$^{1}H$ (200 MHz, $C_6D_6$) δ (ppm) : 5,01 (d, $^{3}J_{H-H}$ = 10 Hz, 1H, H oléfinique) ; 5,66 (d, $^{2}J_{H-H}$ = 10 Hz, 1H, H oléfinique) ; 6,74 (d, $^{3}J_{H-H}$ = 15 Hz, 1H, H oléfinique) ; 7,87 (d, $^{3}J_{H-H}$ = 15 Hz, 1H, H oléfinique) ; 2,81 (d, $^{3}J_{H-P}$ = 5 Hz, 12H, $CH_2Ph$) ; 7,1-7,5 (m, 40H, H aromatiques).
RMN $^{31}P$-[ $^{1}H$ ] (80 MHz, $C_6D_6$) δ (ppm) : 11,9 (s large).

EXEMPLE 7

$Pd(PCy_2Ph)_2(C_6H_5)Cl$ <— $Pd(DBA)(PCy_2Ph)_2$ + $C_6H_5Cl$
Une solution orange du complexe $Pd(DBA)(PCy_2Ph)_2$ dans 30 ml de chlorobenzène portée à 80° C pendant 30 mn devient rapidement jaune pâle. Après évaporation à sec du solvant, le produit formé hormis la DBA, est analysé par RMN.
RMN$^{1}H$ (200 MHz, $C_6D_6$) δ (ppm) : 1, 1-2,7 (m, 44H,Cy) ; 6,9 (m, 3H, H méta et para de $PdC_6H_5$) ; 7,15-7,25 (m, 6H, H meta et para de P-$C_6H_5$) ; 7,53 (d, 2H, H ortho de $PdC_6H_5$) ; 7,7-7,8 (m, 4H, H ortho de P-$C_6H_5$).
RMN $^{31}P$-[ $^{1}H$ ] (80 MHz, $C_6D_6$) δ (ppm) : 24,4 (s).

EXEMPLE 8

$Pd(PBz_3)_2(C_6H_5)Cl$ <— $Pd(DBA)(PBz_3)_2$ + $C_6H_5Cl$
Une solution contenant 500 mg de $Pd(DBA)(PBz_3)_2$ dans 100 ml de chorobenzène est chauffée à 80°C pendant 3 heures puis évaporée à sec. Le résidu solide est lavé avec de l'éther et séché sous vide. Un produit légèrement grisâtre est isolé.
RMN$^{1}H$ (200 MHz, $C_6D_6$) δ (ppm) : 3,25 (t, 12H, $^{2}J_{H-P}$+ $^{4}J_{H-P}$ = 6 Hz, $CH_2$-$C_6H_5$) ; 6,7-7,55 (m, 35H, H aromatiques).
RMN $^{31}P$-[$^{1}H$] (80 MHz, $C_6D_6$) δ (ppm) : 12,5 (s).

EXEMPLE 9

$Pd(PCy_3)_2(C_6H_4COOEt)Cl$ $Pd(DBA)(PCy_3)_2$ + $ClC_6H_4COOEt$
A une solution contenant 380 mg (0,42 mmol) de $Pd(DBA)(PCy_3)_2$ dans 30 ml de toluène sont ajoutés 10 ml de $ClC_6H_4COOEt$. Après 10 minutes d'agitation à 80°C, le mélange a viré du rouge au jaune. Après évaporation du solvant, un solide blanc est précipité avec de l'acétone puis isolé par filtration. 210 mg d'un complexe stable à l'air (0,25 mmol, R = 59%) sont isolés.
IR (nujol) ν ($cm^{-1}$) : 1710 (C = 0)
RMN$^{1}H$ (200 MHz, $C_6D_6$) δ (ppm) : 1,14 (t, J=7Hz, 3H, $CH_3$) ; 4,26 (q, J=7Hz, 2H, $CH_2CH_3$) ; 1, 1-2,45 (m, 66H, $PCy_3$) ; 7,91 (d, J=8Hz, 2H, H arom) ; 8,18 (d, J=8Hz, 2H, H arom).
RMN $^{31}P$-[ $^{1}H$ ] (80 MHz, $C_6D_6$) δ (ppm) : 23,1 (s).

EXEMPLE 10

$Pd(PCy_3)_2(C_6H_4OCH_3)Cl$ $Pd(DBA)(PCy_3)_2$ + $ClC_6H_4OCH_3$
La synthèse a été effectuée dans les mêmes conditions que dans l'exemple 9. Un temps de réaction d'une heure est cependant nécessaire pour l'obtention quantitative d'un produit blanc stable à l'air.
RMN$^{1}H$ (200 MHz, $C_6D_6$) δ (ppm) : 1, 1-2,45 (m, 66H, $PCy_3$) ; 3,58 (s, 3H, $OCH_3$) ; 6,90 (d, J=8Hz, 2H, H arom) ; 7,57 (d, J=8Hz, 2H, H arom).
RMN $^{31}P$-[ $^{1}H$ ] (80 MHz, $C_6D_6$) δ (ppm) : 23,1 (s).

EXEMPLE 11

$Pd(PCy_3)_2(C_6H_4NO_2)Cl$ $Pd(DBA)(PCy_3)_2$ + $ClC_6H_4NO_2$
Une solution contenant 500 mg (0,55 mmol) de $Pd(DBA)(PCy_3)_2$ et lg (6,35 mmol) de $ClC_6H_4NO_2$ dans 50 ml de toluène est chauffée pendant 1 heure à 80°C. Après évaporation du solvant, le solide est lavé avec de

l'acétone ce qui conduit à 420 mg d'un produit blanc (O,51 mmol, R = 93 %).
RMN$^1$H (200 MHz, $C_6D_6$) δ (ppm) : 0,9-2,3 (m,66H,$PCy_3$) ; 7,70 (d, J = 8Hz, 2H, H arom) ; 8,03 (d, J = 8Hz, 2H, H arom).
RMN $^{31}P$-[$^1H$] (80 MHz, $C_6D_6$) δ (ppm) : 23,4 (s).

## Revendications

1. Nouveaux complexes réactionnels de formule (I)

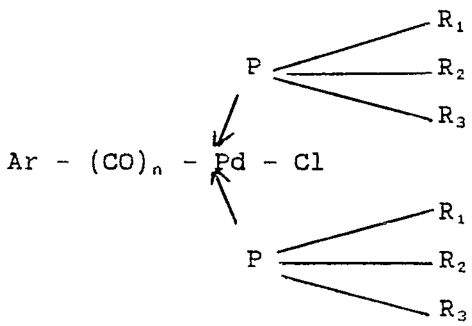

(I)

dans laquelle
- Ar représente un radical aromatique mono ou polycyclique ou hétérocyclique éventuellement substitué
- $R_1$, $R_2$, $R_3$ représentent chacun des groupes identiques ou différents choisis parmi les radicaux cyclohexyl, benzyl, isopropyl, l'un des groupes $R_1$, $R_2$ ou $R_3$ pouvant être remplacé par un groupe phényl lorsque les deux autres représentent un groupe cyclohexyl,
- n représente un nombre entier égal à 0 ou 1.

2. Procédé de préparation des complexes de formule (I) caractérisé en ce que l'on met en présence un complexe de formule II suivante

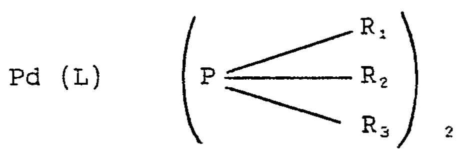

( II )

dans laquelle
- $R_1$, $R_2$, $R_3$ ont la même signification que dans la formule (I)
- L représente un groupe labile avec un dérivé chloroaromatique de formule ArCl et éventuellement de l'oxyde de carbone lorsque n est différent de zéro.

3. Procédé de préparation des complexes de formule (I) caractérisé en ce que l'on met en présence un complexe palladium-diphosphine de formule

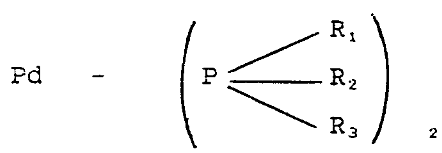

ou un complexe de palladium et d'un groupe facilement labile de formule $Pd(L)_3$ avec un dérivé aromatique chloré et éventuellement de l'oxyde de carbone lorsque n est différent de zéro.

4. Procédé selon les revendications 2 ou 3 caractérisé en ce que le groupe facilement labile (L) est choisi parmi la dibenzylidène acétone ou les groupes alkylènes et de préférence l'éthylène.

5. Procédé de préparation des complexes de formule (I) caractérisé en ce qu'on met en présence un sel de palladium (II), au moins deux équivalents de phosphine de formule

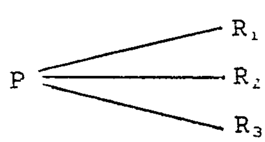

avec un dérivé chloroaromatique, en présence d'un agent réducteur et éventuellement en présence d'oxyde de carbone lorsque n est différent de zéro.

6. Procédé selon les revendications 3 et 5 caractérisé en ce qu'on met en présence une quantité de phosphine telle que le rapport du nombre de moles de phosphine au nombre d'atome gramme de

palladium soit compris entre 2 et 5.

7. Nouveaux complexes de formule (III)

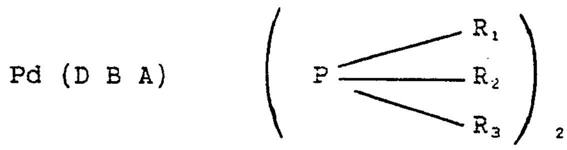

( III )

dans laquelle

- le motif DBA représente la dibenzylidène acétone
- les groupes $R_1$, $R_2$, $R_3$ représentent chacun des groupes identiques ou différents choisis parmi les groupes cyclohexyl, isopropyl, benzyl ou phényl, un seul des radicaux $R_1$, $R_2$ ou $R_3$ pouvant représenter un groupe phényl.

8. Procédé de préparation de complexes de formule (II) caractérisé en ce que l'on met en présence un sel complexe de dibenzylidène acétone palladium de formule $Pd(DBA)_3$ avec au moins deux équivalents molaires de phosphine de formule

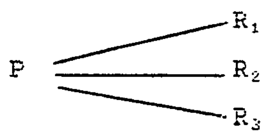

dans un solvant organique.

Office européen des brevets

# RAPPORT DE RECHERCHE EUROPEENNE

Numero de la demande

EP 89 40 1956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | US-A-3 960 932 (R.F. HECK)<br>* Colonne 2, lignes 36-37; exemples 21-23 *<br>--- | 1-8 | C 07 F 15/00 |
| Y | CHEMICAL ABSTRACTS, vol. 98, no. 21, 23 mai 1983, page 678, no. 179589x, Columbus, Ohio, US; G.K. ANDERSON: "Preparation of chloride-bridged organopalladium(II) dimers and their role in the carbonylation of trans-[PdCIR'(PR3)2]", & ORGANOMETALLICS 1983, 2(5), 665-8<br>* Résumé *<br>--- | 1-8 | |
| Y | JOURNAL OF ORGANOMETALLIC CHEMISTRY, vol. 174, 1979, pages 115-120, Elsevier Sequoia S.A., Lausanne, CH; R. CEDER et al.: "Organometallic compounds of transition metals containing phosphine and perchloraryl ligands. VI*. Mono-and bis(Pentachlorophenyl) complexes of nickel and palladium"<br>* Page 120 *<br>--- | 1-8 | **DOMAINES TECHNIQUES RECHERCHES (Int. Cl.5)**<br>C 07 F 15/00 |
| Y | JOURNAL OF THE AMERICAN CHEMICAL SOCIETY, vol. 99, no. 12, 1977, pages 4159-4160; R.D. RIEKE et al.: "Highly reactive transition metal powders. Oxidative insertion of nickel, palladium, and platinum metal powders into aryl-halide bonds"<br>* Page 4160 *<br>--- -/- | 1-8 | |

Le présent rapport a été établi pour toutes les revendications

| Lieu de la recherche | Date d'achèvement de la recherche | Examinateur |
|---|---|---|
| LA HAYE | 04-10-1989 | WELLS A.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Office européen des brevets

# RAPPORT DE RECHERCHE EUROPEENNE

Numero de la demande

EP 89 40 1956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | JOURNAL OF ORGANOMETALLIC CHEMISTRY, vol. 132, 1977, pages 429-437, Elcevier Sequoia S.A., Lausanne, CH; R. USON et al.: "Synthesis of mono- and bi-nuclear perhalophenyl-palladium(II) complexes" * Page 432: "Complex XVI" * --- | 1-8 | |
| Y | JOURNAL OF ORGANOMETALLIC CHEMISTRY, vol. 72, 1974, pages 21-33, Elsevier Sequoia S.A., Lausanne, CH; R.J. CROSS et al.: "2-(arylazo)aryl derivatives of mercury, palladium, platinum, nickel and manganese" * Page 25, formule V * --- | 1-8 | |
| Y | JOURNAL OF CHEMICAL SOCIETY, vol. 44, no. 17, 1979, pages 3069-3072, American Chemical Society; R.D. RIEKE et al.: "Preparation of highly reactive metal powders. Preparation and reactions of highly reactive palladium and platinum metal slurries" * Page 3070, [P(C2H5)3]2Pd(C6H5)Cl * --- | 1-8 | DOMAINES TECHNIQUES RECHERCHES (Int. Cl.5) |
| Y | JOURNAL OF THE AMERICAN CHEMICAL SOCIETY, vol. 92, no. 6, 1970, pages 1511-1521; R.G. MILLER et al.: "Alkenylaryl compounds of nickel(II) and palladium(II). Influence of the transition metal on ligand proton chemical shifts" * Page 1519, composé 2 * --- -/- | 1-8 | |

Le présent rapport a été établi pour toutes les revendications

| Lieu de la recherche | Date d'achèvement de la recherche | Examinateur |
|---|---|---|
| LA HAYE | 04-10-1989 | WELLS A.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 89 40 1956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | JOURNAL OF THE AMERICAN CHEMICAL SOCIETY, vol. 96, no. 8, 1974, pages 2360-2366; G.W. PARSHALL: "En-aryl compounds of nickel, palladium, and platinum. Synthesis and bonding studies" * Page 2364, tableau IV * --- | 1-8 | |
| Y | JOURNAL OF THE CHEMICAL SOCIETY (A), 1970, pages 840-845; R.J. CROSS et al.: "Interaction between organomercurials and halide complexes of platinum, palladium, and nickel. Carbon monoxide insertion into the platinum-carbon bond" * Page 844, (Et3P)2PdPhCl * --- | 1-8 | |
| Y | HOUBEN-WEYL: "Methoden der Organischen Chemie", vol. 13, no. 9B, 1984, édition 4, "Metàllorganische Verbindungen", pages 702-711,715-717,724-725,740-743, Georg Thieme Verlag, Stuttgart, DE * En entier * --- | 1-8 | DOMAINES TECHNIQUES RECHERCHES (Int. Cl.5) |
| Y | M. FIESER et al.: "Reagents for organic synthesis", vol. 6, page 571, A Wiley-Interscience Publication, John Wiley & Sons, New York, US * Résumé * --- | 7,8 | |
| Y | JOURNAL OF ORGANOMETALLIC CHEMISTRY, vol. 209, no. 1, avril 1981, pages 123-130, Elsevier Sequoia S.A., Lausanne, CH; M. ONISHI et al.: "Preparations and characterization of new 2-furfurylpalladium(II) complexes" * Page 125 * --- -/- | 7,8 | |

Le présent rapport a été établi pour toutes les revendications

| Lieu de la recherche | Date d'achèvement de la recherche | Examinateur |
|---|---|---|
| LA HAYE | 04-10-1989 | WELLS A.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Office européen des brevets

# RAPPORT DE RECHERCHE EUROPEENNE

Numero de la demande

EP 89 40 1956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-3 988 358 (HECK)<br>* En entier *<br>--- | 1 | |
| A | US-A-4 157 445 (P. FITTON et al.)<br>--- | 1 | |
| A | CHEMICAL ABSTRACTS, vol. 96, no. 7, 15 février 1982, page 637, no. 52469m, Columbus, Ohio, US; K. ISOBE et al.: "Organopalladium(II) complexes containing carbon-bonded pyridine and picoline as a ligand: preparation structures, and reactions", & HETEROCYCLES 1981, 16(9), 1603-12<br>* Résumé *<br>--- | 1 | |
| A | CHEMICAL ABSTRACTS, vol. 101, no. 24, 17 juin 1985, page 673, no. 211414e, Columbus, Ohio, US; B. CROCIANI et al.: "Preparation and reactions of 1-methylpyrid-6-one-2-yl compounds of palladium(II) and platinum(II)", & J. ORGANOMET. CHEM. 1984, 269(3), 295-304<br>* Résumé *<br>--- | 1 | DOMAINES TECHNIQUES RECHERCHES (Int. Cl.5) |
| A | CHEMICAL ABSTRACTS, vol. 104, no. 19, 12 mai 1986, page 685, no. 168608u, Columbus, Ohio, US; B. CROCIANI et al.: "Preparation and protonation of 2-pyrimidyl- and 2-pyrazylpalladium(II) complexes", & J. ORGANOMET. CHEM. 1985, 29(2), 259-72<br>* Résumé *<br>----- | 1 | |

Le présent rapport a été établi pour toutes les revendications

| Lieu de la recherche | Date d'achèvement de la recherche | Examinateur |
|---|---|---|
| LA HAYE | 04-10-1989 | WELLS A.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)